# EUROPÄISCHE PATENTSCHRIFT

(11) **EP 0 668 898 B1**
(45) Veröffentlichungstag und Bekanntmachung des Hinweises auf die Patenterteilung: **12.03.1997**
(21) Anmeldenummer: 94900799.1
(22) Anmeldetag: 10.11.1993
(51) Int. Cl.: C09K 17/00, E21B 33/138, C08G 18/28

(54) **VERFAHREN ZUM ABDICHTEN VON WASSERZUFLÜSSEN AUS GEOLOGISCHEN GESTEINSFORMATIONEN**
METHOD OF SEALING OFF WATER-INFLUX POINTS IN ROCK FORMATIONS
PROCEDE PERMETTANT DE COLMATER DES VENUES D'EAU PROVENANT DE SYSTEMES ROCHEUX GEOLOGIQUES

(30) Priorität: 10.11.1992 DE 4237836
(43) Veröffentlichungstag der Anmeldung: 30.08.1995
(73) Patentinhaber: BERGWERKSVERBAND GMBH, D-45307 Essen (DE)
(72) Erfinder: MEHESCH, Hans, Ernst, D-45134 Essen (DE); CORNELY, Wolfgang, D-45966 Gladbeck (DE); WOBIG, Dieter, D-45134 Essen (DE); FISCHER, Martin, D-46119 Oberhausen (DE); CZYSOLLEK, Oliver, D-45309 Essen (DE)
(74) Vertreter: Schumacher, Horst, Dr. Dipl.-Phys.
(86) Internationale Anmeldenummer: EP9303142
(87) Internationale Veröffentlichungsnummer: WO9411461

(56) Entgegenhaltungen:
- EP-A- 0 143 304
- DE-A- 3 502 997
- US-A- 3 367 892
- US-A- 3 719 050
- US-A- 4 113 014
- US-A- 4 114 382

## Beschreibung

Die Erfindung betrifft ein Verfahren zum Abdichten von Wasserzuflüssen aus geologischen Gesteinsformationen gemäß dem Oberbegriff des Anspruchs.

Aus der US-PS 4 454 252 ist es bekannt, daß zum Stoppen und Abdichten von Wasserzuflüssen aus geologischen Gesteinsformationen schnell reagierende Polyurethan-Zweikomponentensysteme aus Polyol und Isocyanat injiziert werden. Die zwei Komponenten werden unmittelbar vor dem Eintritt in das Gebirge in einem statischen Mischer vermischt. Unter Wasserkontakt schäumen sie auf und härten ohne Wasser aus, ohne aufzuschäumen. Da das zuerst injizierte Material das Wasser verdrängt, bildet das zum Schluß injizierte Harz eine ungeschäumte und somit auch langfristig dichte Sperre für das Wasser. Bei allzu heftigem Wasserzutritt kommt es jedoch vor, daß, bevor die Reaktion stattfinden kann, die beiden Komponenten intensiv mit dem Wasser durchmischt werden. Dies führt dazu, daß Wasser und Polyol eine stabile Emulsion bilden und daß das in Wasser unlösliche Isocyanat unter Bildung von Polyharnstoff in Form eines spröden Schaumstoffes oder von Schlamm abreagiert, so daß eine Wasserabdichtung nicht mehr erreicht werden kann.

Die DE-A-3 502 997 betrifft ein Verfahren zur Verfestigung von geologischen Formationen im Untertagebergbau oder im Tiefbau, insbesondere im Steinkohlenbergbau mittels zu Polyurethanen ausreagierenden Reaktionsgemischen auf Basis von organischen Polyisocyanaten und Polyhydroxylverbindungen, wobei spezielle monofunktionelle Alkohole als den Schäumvorgang regulierende Additive eingesetzt werden.

Der Erfindung liegt die Aufgabe zugrunde, ein Verfahren zu sicheren Abdichtung auch starker Wasserzuflüsse bereitzustellen.

Diese Aufgabe wird erfindungsgemäß durch die kennzeichnenden Merkmale des Patentanspruchs gelöst.

Es hat sich überraschenderweise in Versuchen erwiesen, daß das erfindungsgemäße Zweikomppnenten-Kunstharzgemisch wenige Sekunden nach dem Mischen, d.h. im allgemeinen vor Verlassen der Injektionslanze, eine gelartige Konsistenz einnimmt. Auch stark fließendes Wasser ist nicht in der Lage, diese Mischung wieder zu zerstören, so daß das Harz ungehindert aushärtet und nur an seiner Oberfläche durch den Wasserkontakt aufschäumt.

Bei dem erfindungsgemäßen Zweikomponenten-Polyurethanharz wird die Isocyanat-Komponente mit einer Polyol-Komponente umgesetzt, die einen unterschüssigen Anteil von primären oder sekundären Di- oder Polyaminen enthält. Die Aminoverbindungen reagieren wesentlich schneller als die Hydroxylverbindungen mit diesen Isocyanaten. Dabei bewirkt die Reaktion des unterschüssigen Aminanteils in der Polyol-Komponente überraschenderweise innerhalb weniger Sekunden eine deutliche Viskositätssteigerung, die dem System quasithixotrope Eigenschaften verleiht. Die Harzmischung fließt nicht mehr durch Gravitation, sie muß durch Pumpendruck bewegt werden.

Bei den beim erfindungsgemäßen Verfahren einzusetzenden Polyisocyanatkomponente a) handelt es sich vorzugsweise um Polyphenylen-polymethylen-polyisocyanate, wie sie durch Anilin/Formaldehyd-Kondensation und anschließende Phosgenierung hergestellt werden ("polymeres MDI") oder um Carbodiimid-, Biuret-, Urethan- und/oder Allophanatgruppen aufweisende, bei Raumtemperatur flüssige Derivate dieser Polyisocyanate sowie deren Prepolymere, d.h. Umsetzungsprodukte von Polyisocyanaten mit Polyolen im Unterschuß. Als Polyole zur Herstellung von Prepolymeren kommen aus der Polyurethanchemie allgemein bekannte Verbindungen in Betracht, vorzugsweise langkettige Polyole mit OH-Zahlen unterhalb von 150 mg KOH/g Substanz. Die bei Raumtemperatur flüssigen, durch Phosgenierung von Anilin/Formaldehyd-Kondensaten erhaltenen Polyisocyanatgemische ("polymeres MDI") sowie deren flüssige, NCO-Gruppen aufweisende Umsetzungsprodukte mit unterschüssigen Mengen (NCO/OH-Molverhältnis = 1 : 0,005 bis 1 : 0,3) mehrwertiger Alkohole des Molekulargewichtsbereiches 62 bis 3000, insbesondere Ethergruppen aufweisende Polyole des Molekulargewichtsbereiches 106 bis 3000 sind bevorzugt. Bei Raumtemperatur flüssige Gemische aus 2,4'- und 4,4'-Diisocyanatodiphenylmethan sind ebenfalls als Polyisocyanatkomponenten a) geeignet. Grundsätzlich kommen erfindungsgemäß aber auch andere Polyisocyanate, wie sie z.B. aus der DE-OS 28 32 253, Seite 10 und 11, bekannt sind, in Frage. Ganz besonders bevorzugt werden Polyisocyanatgemische der Diphenylmethanreihe einer Viskosität bei 25°C von 50 bis 500 mPa.s mit einem NCO-Gehalt von ca. 30 bis 32 Gew.-% eingesetzt.

Bei der Polyolkomponente b) handelt es sich um Gemische aus organischen Polyhydroxylverbindungen mit OH-Zahlen zwischen 30 und 2000, wobei die OH-Zahl des Gemisches zwischen 200 und 500 mg KOH/g Substanz liegt.

Bei den Polyhydroxylverbindungen handelt es sich vorzugsweise um die aus der Polyurethanchemie an sich bekannten Polyetherpolyole bzw. um Gemische verschiedener derartiger Polyetherpolyole. Gut brauchbare Polyetherpolyole sind beispielsweise Propoxylierungsprodukte von zwei- bis achtwertigen Startermolekülen wie beispielsweise Wasser, 1,2-Dihydroxypropan, Trimethylolpropan, Pentaerythrit, Glycerin, Sorbit, Ethylendiamin und gegebenenfalls Rohrzucker. Im allgemeinen weist die Komponente (i) eine mittlere Hydroxylfunktionalität von 2,0 bis 5,0, vorzugsweise 2,0 bis 3 auf. Geeignete derartige Gemische können beispielsweise dadurch erhalten werden, daß man entsprechende Gemische von Startermolekülen der beispielhaft genannten Art einer Propoxylierungsreaktion unterzieht. Es ist jedoch auch möglich, separat hergestellte Polyhydroxylpolyether nach ihrer Herstellung miteinander erfindungsgemäß einzusetzenden Komponente (i) abzumischen.

Als erfindungsgemäße Amine werden primäre oder sekundäre Di- oder Polyamine und deren Gemische verwendet.

Geeignete aromatische Amine sind beispielsweise: 4,4'Diaminodiphenylmethan, 3,3'Dimethyl-4,4'diaminodiphenylmethan, 3,3'Dichlor-4,4'diaminodiphenylmethan, 1,3,5-Triisopropyl-2,4-diaminobenzol, 1-Methyl-3,5-diethyl-2,4-diaminobenzol, 1-Methyl-3,5-diethyl-2,6-diaminobenzol, 1,3,5-Triethyl-2,4-diaminobenzol und technische Gemische mit den drei letztgenannten Verbindungen 3,5-Di(methylthio)-2,4-toluoldiamin, 3,5-Di(methylthio)-2,6-toluoldiamin und deren technische Gemische, 1,2-Ethylen-di-(4-amino)thiophenolether, 1,3-Propandiol-di(p-amino)-benzoat, 3,5-Diamino-4-chlorobenzoesäure-isobutylester, 1,3-Propylendi-(4-amino)-benzoat.

Geeignete cycloaliphatische Amine sind: Isophorondiamin, 4,4'Diaminodicyclohexylmethan, 3,3'Dimethyl-4,4'diaminocyclohexylmethan, N-Cyclohexyl-1,3-diaminopropan oder N-(β-Aminoethyl)piperazin.

Geeignete aliphatische Amine sind z.B. Diethylentriamin, Triethylentetramin, Tetraethylenpentamin, Di-isopropyltriamin.

Als in der Polyurethanchemie übliche Hilfs- und Zusatzmittel c) können verwendet werden:

Katalysatoren zur Beschleunigung der verschiedenen Isocyanat-Additionsreaktionen wie insbesondere wismut- oder zinnorganische Verbindungen, z.B. Dibutylzinndilaurat, organische Alkalisalze, z.B. Kaliumacetat oder tertiäre Amine, z.B. Triethylendiamin, Dimethylethanolamin oder N-Ethylenmorpholin. Diese Katalysatoren werden im allgemeinen in einer Menge von bis zu 2 Gew.-%, vorzugsweise in einer Menge von 0,1 - 1 Gew.-%, bezogen auf das Gesamtgemisch, mitverwendet.

Wasserfänger zur Herstellung ungeschäumter oder schwach geschäumter Produkte, z.B. Zeolith-Paste, die in einer Menge zwischen 0,2 und 10 Gew.-%, vorzugsweise zwischen 1 und 5 Gew.-% eingesetzt werden.

Schaumregulatoren, d.h. Schaumstabilisatoren oder -destabilisatoren, vorzugsweise auf Polysiloxanbasis. Sie werden in einer Menge bis zu 2 %, vorzugsweise zwischen 1 ppm und 1000 ppm, bezogen auf das Gesamtgemisch, zugesetzt.

Gegebenenfalls Wasser als Treibmittel, das in Mengen bis zu 5 Gew.-%, vorzugsweise 0,5 - 2 Gew.-%, zugesetzt werden kann.

Gegebenenfalls physikalische Treibmittel, wie teilhalogenierte Kohlenwasserstoffe oder andere flüchtige Verbindungen, z.B. Dichlorfluormethan oder Pentan, von denen bis zu 20 % zugesetzt werden können.

Gegebenenfalls organische oder anorganische Flammschutzmittel, z.B. Phosphorsäureester bzw. Aluminiumhydroxidderivate in Mengen bis zu 20 Gew.-% für flüssige und 50 Gew.-% für feste Mittel.

Gegebenenfalls Füllstoffe, z.B. Harnstoff, Quarzmehl oder Talk in Mengen bis zu 50 %.

In den beim erfindungsgemäßen Verfahren einzusetzenden Reaktionsgemischen liegen die einzelnen Komponenten im übrigen in einer solchen Menge vor, die einer Isocyanat-Kennzahl von 90 bis 150, vorzugsweise 120 bis 140 entsprechen. Unter "Isocyanatkennzahl" ist hierbei der Quotient aus der Anzahl der im Reaktionsgemisch vorliegenden Isocyanatgruppen geteilt durch die Anzahl der im Reaktionsgemisch vorliegenden, gegenüber Isocyanatgruppen reaktionsfähigen Gruppen, multipliziert mit 100, zu verstehen, wobei das Wasser als difunktionelle Verbindung in die Berechnung eingeht.

Vor der Durchführung des erfindungsgemäßen Verfahrens werden im allgemeinen die gegebenenfalls mitzuverwendenden Hilfs- und Zusatzmittel c) mit der Polyolkomponente b) vereinigt, worauf sich eine Verarbeitung nach dem Zweikomponenten-Prinzip anschließt. Dies bedeutet, daß zur Herstellung der Reaktionsgemische die Polyisocyanat-Komponente a) mit der Polyolkomponente b) bzw. dem Gemisch aus Polyol-komponente b) und den Hilfs- und Zusatzmitteln c) intensiv durchmischt wird. Hierzu können die an sich bekannten Mischaggregate des Standes der Technik verwendet werden.

### Verfahrensdarstellung

Die Verfahrenstechnik ist identisch mit der bei Zweikomponentenharzen üblichen, d.h. durch Einschlag einer Lanze bzw. durch Bohren eines Loches und anschließendes Setzen eines Beschickungsrohres mit Bohrlochverschluß wird der Zugang zum wasserführenden Bereich geschaffen. Die beiden Komponenten werden durch eine Doppelförderpumpe angesaugt, getrennt bis zur Lanze bzw. zum Beschickungsrohr geführt, dort miteinander vereinigt und über einen Statikmischer gemischt. Nach Durchströmen der Lanze bzw. des Rohres härtet das Gemisch in der wasserführenden Zone aus.

Die nachfolgenden Ausführungsbeispiele gemäß den Tabellen 1 bis 4 dienen der weiteren Erläuterung des Verfahrens. Alle Prozentangaben beziehen sich auf Massenprozente.

### BEISPIELE

In den Beispielen gemäß den Tabellen 3 und 4 werden die in den Tabellen 1 und 2 aufgeführten Ausgangskomponenten für die Systemkomponenten b) und c) eingesetzt:

**Tabelle 1**

| **Systemkomponente b)** | **Ausgangskomponenten** | **OH-Zahl [mg KOM/g]** | **Viskosität bei 25°C (mPa.s)** |
|---|---|---|---|
| Basispolyol I | Glycerin und Propylenoxid | 380 | 450 |
| Basispoyol II | Saccharose, 1,2-Propandiol, Propylenoxid | 380 | 580 |
| Basispolyol III | Trimethylolpropan Propylenoxid | 380 | 600 |
| Flexibilisierungspolyol I | 1,2-Propandiol Propylenoxid | 56 | 324 |
| Flexibilisierungspolyol II | dto | 260 | 73 |
| Flexibilisierungspolyol III | Butandiol Tetrahydrofuran | 176 | 277 |
| Flexibilisierungspolyol IV | Triethanolamin Propylenoxid | 27 | 870 |
| Ethylenglykol | - | 1808 | 16 |
| Diethylenglykol | - | 1057 | 26 |
| Glycerin | - | 1827 | 750 |
| Rizinusöl | | 160 | 680 |
| Diamin I | (N-(β-Aminoethyl)piperazin) | | |
| Diamin II | (N-Cyclohexyl-1,3-diaminopropan) | | |
| Diamin III | (3,3'-Dimethyl-4,4'diaminocyclohexylmethan) | | |
| Diamin IV | 1,3,5-Triethyl-2,4-diaminobenzol, technisch | | |

**Tabelle 2**

| **Systemkomponenten c)** | **Ausgangskomponenten** |
|---|---|
| Katalysator I | Dimethylethanolamin |
| Katalysator II | Triethylendiamin, 33 % in Ethylenglykol |
| Katalysator III | Dibutylzinndilaurat |
| Katalysator IV | Kaliumacetat |
| Katalysator V | 2,4,6-Tris(dimethylaminomethyl)phenol |
| Zeolith-Paste | Zeolithtyp T 50 % in Rizinusöl |

Aus den Tabellen 1 bis 4 geht hervor, daß für das Zweikomponenten- Polyurethansystem gemäß der Erfindung eine breite Palette an Ausgangskomponenten, insbesondere für die Systemkomponente b) (Tabelle 1) sowie auch für die Systemkomponente c) (Tabelle 2).

Selbstverständlich sind außer den aufgeführten Ausgangskomponenten auch noch weitere geeignet, denn bei den in Tabelle 1 und 2 aufgeführten Komponenten handelt es sich lediglich um solche, die in wechselnden Zusammensetzungen bzw. Formulierungen in den Tabellen 3 und 4 aufgelistet sind soweit sie in Versuchsreihen in Verbindung mit in den Tabellen 3 und 4 genannten Systemkomponenten a) zu geeigneten Zweikomponenten-Polyurethangemischen geführt haben, die in Bruchteilen einer Minute zu einer gelartigen Konsistenz gelieren und in der Lage sind, in diesem quasi-thixotropen Zustand auch stark fließendes Wasser zurückzuhalten bis in einer nach Minuten gemessenen Erstarrungszeit eine Aushärtung erfolgt ist.

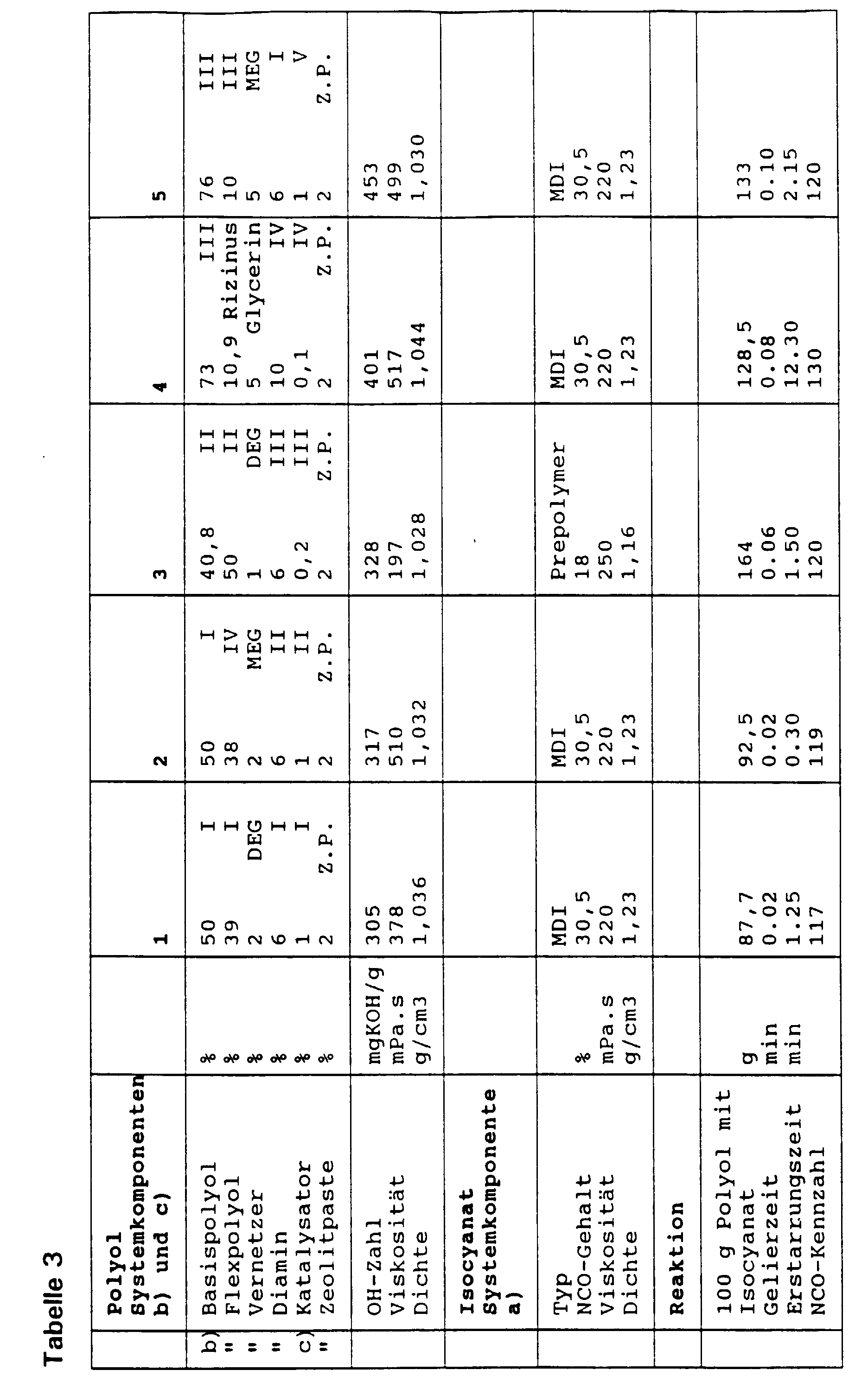

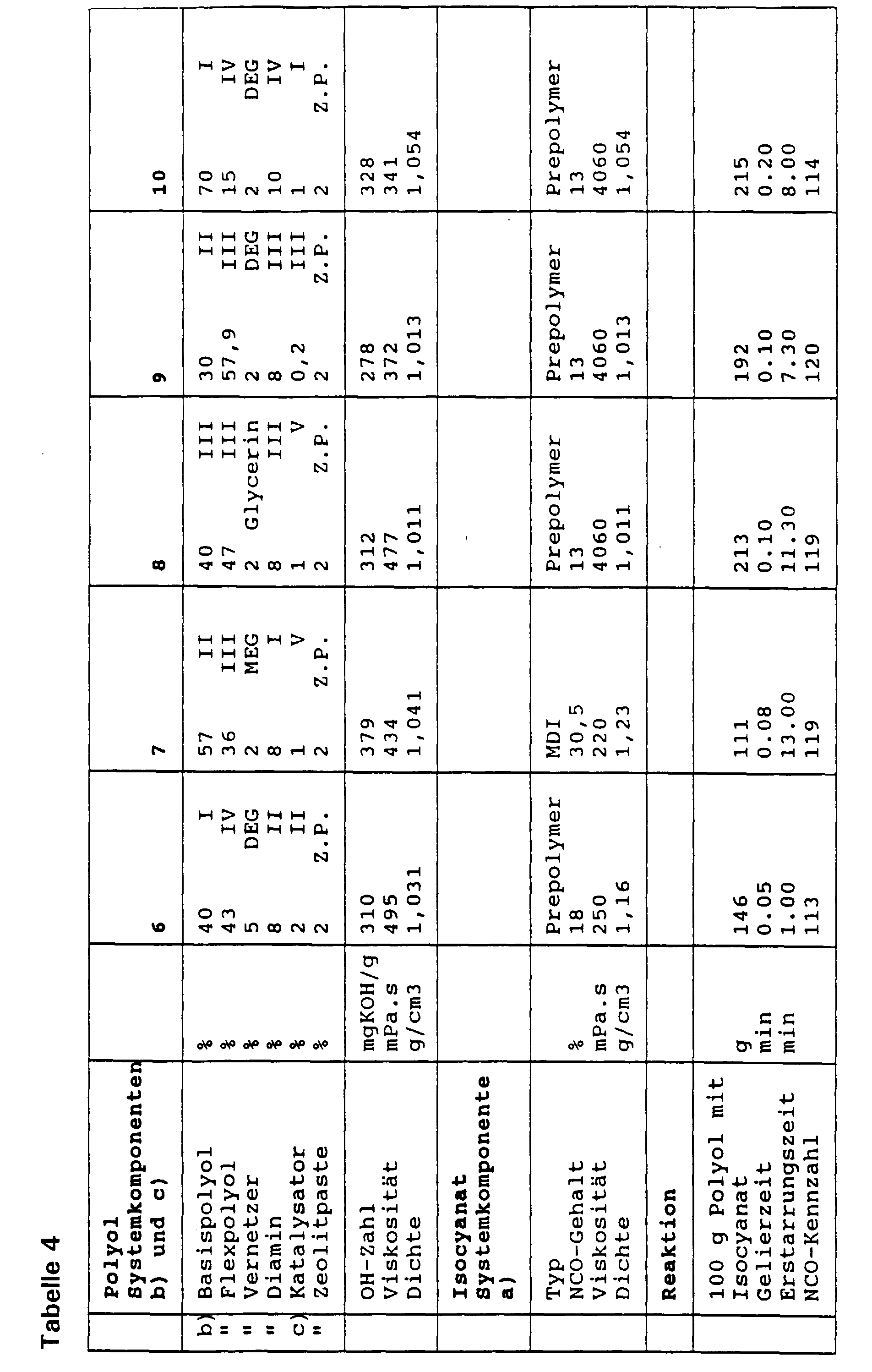

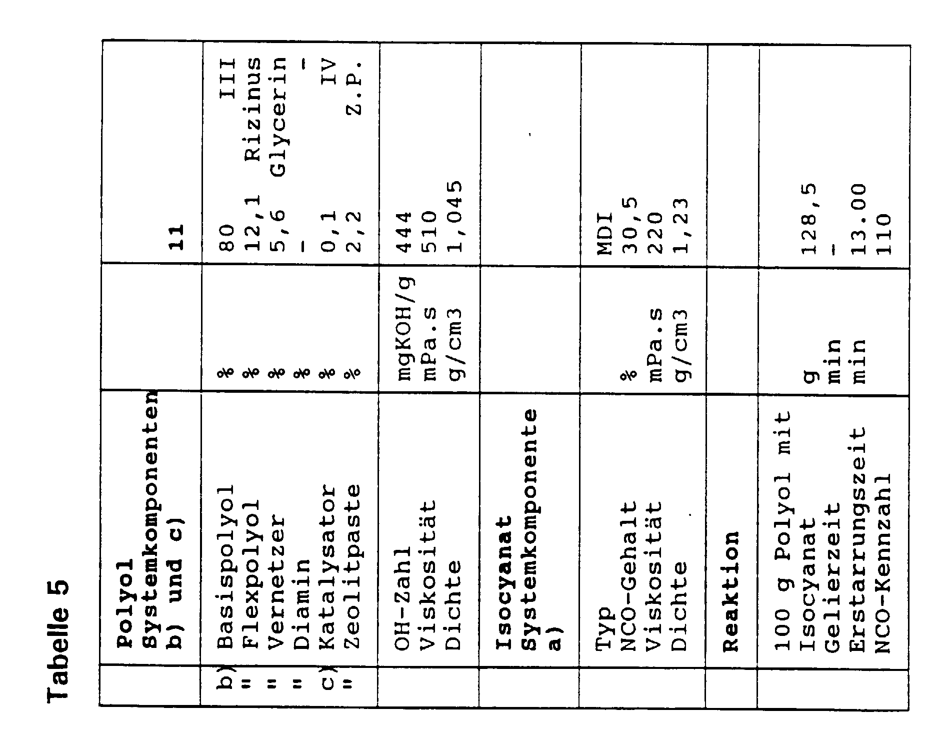

In den Tabellen 3 und 4 sind 10 Beispiele aufgeführt, die die entsprechenden Formulierungsanleitungen enthalten, um die vorgenannten Reaktionsergebnisse zu gewährleisten.

In Tabelle 5, Beispiel 11, ist ein Gegenbeispiel aufgeführt, bei dem die Systemkomponente b) ohne ein Diamin zusammengestellt wurde, bei sonst ähnlicher Zusammensetzung wie die Beispiele 1 bis 10. Bei der Anwendung eines solchen Gemisches wurde der spezielle Effekt einer kurzzeitig eintretenden Gelierung zu einer gelartigen Konsistenz bzw. einem quasi-thixotropen Zustand, der zum Zurückhalten des fließenden Wassers geeignet ist, nicht erreicht.

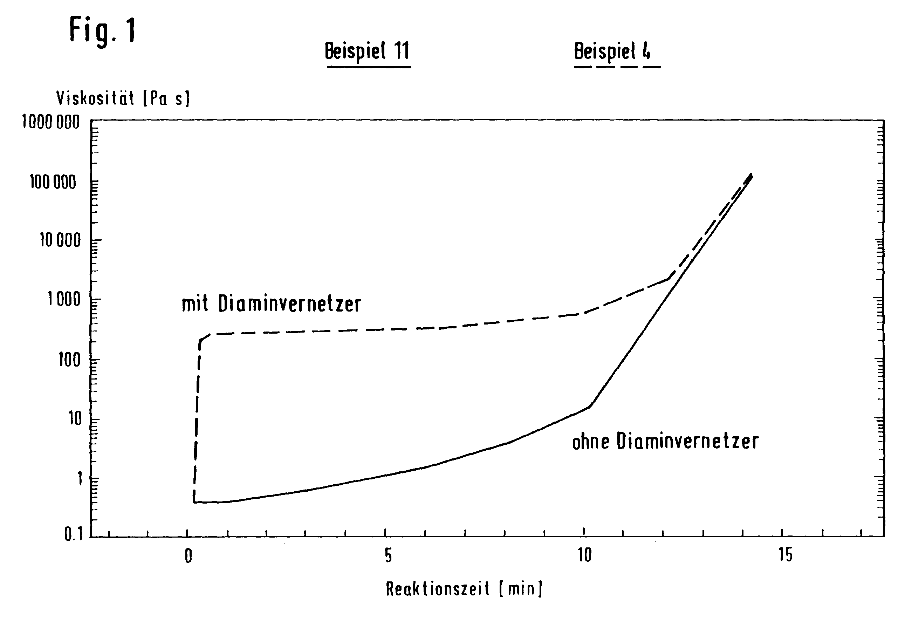

Aus der Figur 1 ist zu entnehmen, daß ein steiler Viskositätsanstieg in Minutenbruchteilen nur bei Gemischen erreicht wird, in denen ein Diaminvernetzer, wie am Gemisch nach Beispiel 4 aufgezeigt ist, verwendet wird und daß demgegenüber ohne Diaminvernetzer, wie am Beispiel 11 demonstriert ist, nur eine allmähliche Viskositätszunahme erfolgt.

Bei Injektionsharzen auf der Basis von Zweikomponenten-Polyurethanharzen, die keine gelartige Konsistenz nach dem Vermischen der Komponenten ausbilden, kommt es bei der Anwendung im stark zerklüfteten Gestein zu einem Versickern infolge Schwerkrafteinwirkung. Bei dem erfindungsgemäßen Polyurethanharzsystem auf Basis eines Zweikomponenten-Polyurethans steigt dieses nach dem Vermischen der niedrig viskosen Einzelkomponenten im Volumenverhältnis 1 : 1 nach 2 - 12 Sekunden zu einem schmierfettartigen Produkt an, das nach 4 - 5 Minuten aushärtet.

Das System ist mit der bekannten Injektionstechnik für Zweikomponenten-Polyurethangemische zu verarbeiten, so daß keine speziellen Dosierpumpen erforderlich sind.

### Beispiel 12

Ein senkrecht stehendes Plexiglasrohr von 1,5 m Länge und 19 cm innerem Durchmesser, das in der Mitte seines Mantels eine Bohrung aufweist und an seinem unteren Ende durch einen Siebboden verschlossen ist, wird mit Kies der Sieblinie 8-32 mm gefüllt. Man läßt Wasser mit einer Flußrate von 8 l/min. durch die Schüttung fließen.

Zur Abdichtung wird mit Hilfe einer Zweikomponentenpumpe (Flußrate 1 l/min.) ein Harz gemäß Rezeptur 2 in die Mitte des Rohres gepumpt.

Nach 24 s, d.h. 4 kg verpumpten Harzes, ist der Wasserfluß gestoppt. Das im wesentlichen umgeschäumte Harz füllt das freie Volumen von ca. 20 cm Säulenhöhe aus. Das Abwasser ist klar.

### Beispiel 13

Mit demselben Versuchsaufbau wie bei Beispiel 12 wird ein Harzgemisch folgender Rezeptur gepumpt.
- Polyol-Komponente: 45 Gew. T: Desmophen 4012
(Polypropylenglykol auf Basis Trimethylolpropan mit der OH-Zahl 380)
- 45 Gew. T: Desmophen 4000Z
(Polypropylenglykol auf Basis Propylenglykol, OH-Zahl 270)
- 3 Gew. T: Triethylendiamin, 33 % in Dipropylenglykol
- 7 Gew. T: Desmophen 3600
(Polypropylenglykol auf Basis Propylenglykol, OH-Zahl 50)

Nach 35 s, d.h. 6 kg verpumpten Harzes ist der Wasserfluß gestoppt. Das freie Volumen von ca. 70 cm Säulenhöhe ist mit Schaum unterschiedlicher Dichte verfüllt. Im Abwasser finden sich größere Mengen an emulgiertem Polyol, Polyharnstoffschlamm und Schaumklumpen.

### Beispiel 14

Der Versuchsaufbau von Beispiel 12 wird wie folgt abgeändert. Das obere Ende des Rohres wird durch Aufkleben einer Rundscheibe geschlossen und mit einer Öffnung versehen. Diese Öffnung wird mit Wasser einer Flußrate von 8 l/min. und eines Druckes von 20 m Wassersäule beaufschlagt.

Unter diesen Umständen müssen in 43 s 7 kg Harz verpumpt werden, ehe der Wasserfluß gestoppt ist. Das im wesentlichen ungeschäumte Harz füllt das freie Volumen von ca. 50 cm Säulenhöhe aus. Das Abwasser ist klar.

### Beispiel 15

Mit demselben Versuchsaufbau wie in Beispiel 14 wird ein Harzgemisch wie in Beispiel 13 gepumpt.

Nach 60 s und Verpumpen von 10 kg Harz wird der Versuch abgebrochen, ohne daß der Wasserfluß gestoppt werden kann, obwohl das Rohr unterhalb des Harzzutritts von Schaum durchsetzt ist. Im Abwasser finden sich erhebliche Mengen an emulgiertem Polyol, Polyharnstoffschlamm und Schaumklumpen.

## Patentansprüche

1. Verfahren zum Abdichten von Wasserzuflüssen aus geologischen Gesteinsformationen in untertägige Hohlräume aus Lockergestein und in Baugruben mittels eines Polyurethans, bei dem man eine Isocyanat-Komponente a) und eine Polyolkomponente b), wobei a) und/oder b) Hilfs- und Zusatzstoffe hinzugefügt werden, in einem Mischer innig vermischt und die so erhaltene Mischung über Borhlöcher oder mittels Injektionslanzen unter Druck in die Gesteinsformationen einbringt, **dadurch gekennzeichnet,** daß man der Polyol-Komponente b) einen unterschüssigen Anteil von primären oder sekundären Di- oder Polyaminen zufügt.

2. Verfahren nach Anspruch 1, **dadurch gekennzeichnet,** daß als Amine primäre oder sekundäre Di- oder Polyamine und deren Gemische verwendet werden.

3. Verfahren nach Anspruch 1, **dadurch gekennzeichnet,** daß als aromatische Amine 4,4'Diaminodiphenylmethan, 3,3'Dimethyl-4,4'diaminodiphhenylmethan, 3,3'Dichlor-4,4'diaminodiphenylmethan, 1,3,5-Triisopropyl-2,4-diaminobenzol, 1-Methyl-3,5-diethyl-2,4diaminobenzol, 1-Methyl-3,5-diethyl-2,6-diaminobenzol, 1,3,5-Triethyl-2,4-diaminobenzol und technische Gemische mit den drei letztgenannten Verbindungen, 3,5-Di(methylthio)-2,4-toluoldiamin, 3,5-Di(methylthio)-2,6-toluoldiamin und deren technische Gemische, 1,2-Ethylen-di-(4-amino)thiophenol-ether,1,3-Propandiol-di(p-amino)-benzoat, 3,5-Diamino-4-chlorobenzoesäure-isobutylester, 1,3-Propylendi-(4-amino)benzoat verwendet werden.

4. Verfahren nach Anspruch 1, **dadurch gekennzeichnet,** daß als cycloaliphatische Amine Isophorondiamin, 4,4'Diaminodicyclohexylmethan, 3,3'Dimethyl-4,4'diaminocyclohexylmethan, N-Cyclohexyl-1,3-diaminopropan oder N-(β-Aminoethyl)piperazin verwendet werden.

5. Verfahren nach Anspruch 1, **dadurch gekennzeichnet,** daß als aliphatische Amine Diethylentriamin, Triethylentetramin, Tetraethylenpentamin, Di-isopropyltriamin verwendet werden.

6. Verfahren nach Anspruch 1, **dadurch gekennzeichnet,** daß bei den einzusetzenden Reaktionsgemischen die einzelnen Komponenten in einer solchen Menge vorliegen, die einer Isocyanat-Kennzahl von 90 bis 150, vorzugsweise 120 bis 140, entsprechen.

## Claims

1. A process for sealing off inflows of water from geological rock formations in underground caverns of loose rock and in excavations by means of a polyurethane, in which an isocyanate component **a)** and a polyol component **b)** are thoroughly mixed in a mixer, auxiliary agents and additives being added to **a)** and/or **b)**, and the mixture obtained in this way is introduced under pressure into the rock formation by way of bore holes or by means of injection lances, **characterized in that** a deficit proportion of primary or secondary di- or polyamines is added to the polyol component **b)**.

2. A process according to Claim 1, **characterized in that** primary or secondary di- or polyamines and mixtures thereof are used as the amines.

3. A process according to Claim 1, **characterized in that** 4,4'-diaminodiphenylmethane, 3,3'-dimethyl-4,4'-diaminodiphenylmethane, 3,3'-dichloro-4,4'-diaminodiphenylmethane, 1,3,5-triisopropyl-2,4-diaminobenzene, 1-methyl-3,5-diethyl-2,4-diaminobenzene, 1-methyl-3,5-diethyl-2,6-diaminobenzene, 1,3,5-triethyl-2,4-diaminobenzene and industrial mixtures with the three last-named compounds, 3,5-di(methylthio)-2,4-toluenediamine, 3,5-di(methylthio)-2,6-toluenediamine and industrial mixtures thereof, 1,2-ethylene-di(4-amino)thiophenol ether, 1,3-propanediol-di(p-amino)-benzoate, 3,5-dianino-4-chloroisobutyl benzoate, 1,3-propylene-di-(4-amino)benzoate are used as aromatic amines.

4. A process according to Claim 1, **characterized in that** isophorone diamine, 4,4'-diaminodicyclohexylmethane, 3,3'-dimethyl-4,4'-diaminocyclohexylmethane, N-cyclohexyl-1,3-diaminopropane or N-(β-aninoethyl)piperazine are [*sic*] used as cycloaliphatic amines.

5. A process according to Claim 1, **characterized in that** diethylenetriamine, triethylenetetramine, tetraethylenepentamine, di-isopropyltriamine are used as aliphatic amines.

6. A process according to Claim 1, **characterized in that** in the reaction mixtures to be used the individual components are present in a quantity corresponding to an isocyanate coefficient of from 90 to 150, preferably from 120 to 140.

## Revendications

1. Procédé pour colmater des venues d'eau provenant de formations rocheuses géologiques dans des cavités souterraines se composant d'une roche poreuse et dans des fouilles au moyen d'un polyuréthanne, pour lequel on mélange, intimement dans un mélangeur, un composant d'isocyanate a) et un composant de polyol b), des additifs et des adjuvants étant ajoutés à a) et/ou b), et le mélange ainsi obtenu étant introduit sous pression dans la formation rocheuse par l'intermédiaire de trous de forage ou au moyen de lances d'injection, caractérisé en ce qu'on ajoute, au composant de polyol b), une part déficitaire de polyamines ou diamines primaires ou secondaires.

2. Procédé selon la revendication 1, caractérisé en ce qu'en tant qu'amine sont utilisées des polyamines ou diamines primaires ou secondaires, et leurs mélanges.

3. Procédé selon la revendication 1, caractérisé en ce qu'en tant qu'amines aromatiques sont utilisés 4,4'-diaminodiphénylméthane, 3,3'diméthyl-4,4'diaminodiphénylméthane, 3,3'dichlore-4,4'diaminodiphénylméthane, 1,3,5-triisopropyle-2,4-dianiline, 1-méthyle-3,5-diéthyle-2,4-dianiline, 1-méthyle-3, 5-diéthyle-2,6-dianiline, 1,3,5-triéthyle-2,4-dianiline et des mélanges techniques avec les trois composés cités en derniers, 3,5-di(méthylthio)-2,4-diamine de toluène, 3,5-di(méthylthio)-2,6-diamine de toluène et leur mélanges techniques, 1,2-éthylène-di-(4-amino)thiophénol-éther, 1,3-propandiol-di(p-amino)-benzoate, 3,5-diamino-4-acide chlorobenzoïque-ester isobutylique, 1,3-propylendi-(4-amino) benzoate.

4. Procédé selon la revendication 1, caractérisé en ce qu'en tant qu'amines cycloaliphatiques sont utilisés l'isophorondiamine, 4,4'diaminodicyclohéxylméthane, 3,3'diméthyl-4,4'diaminocyclohéxylméthane, N-cyclohéxyl-1,3-diaminopropane ou N-(β-Aminoéthyl)pipérazine.

5. Procédé selon la revendication 1, caractérisé en ce qu'en tant qu'amines aliphatiques sont utilisées la triamine de diéthylène, la tétramine de triéthylène, la pentamine de tétraéthylène, la triamine di-isopropylique.

6. Procédé selon la revendication 1, caractérisé en ce que, pour les mélanges de réaction à utiliser, les différents composants sont présents dans une quantité qui correspond à un nombre caractéristique d'isocyanate de 90 à 150, de préférence de 120 à 140.
